# EUROPEAN PATENT APPLICATION

(11) **EP 2 322 036 A1**
(43) Date of publication of application: **18.05.2011**
(21) Application number: 10275117.9
(22) Date of filing: 15.11.2010
(51) Int. Cl.: A01K 91/047, A01K 95/02

(54) **Fishing rig clip**

(30) Priority: 14.11.2009 GB 0919992
(71) Applicant: Preston Innovations Limited, Telford Shropshire TF3 3BD (GB)
(72) Inventor: Preston, David, Shropshire TF3 3BD (GB)
(74) Representative: Newell, William Joseph

(57) **Abstract**

A lead clip includes an inner core (30,32) designed to be closed around a connecting element such as a swivel (42) connecting a fishing rig (36) to the main fishing line. The fishing rig comprises a flexible tube (48) through which runs the hook length line. When closed, the inner core (30,32) anchors the connecting element against escape from the lead clip; and grips the flexible tube to prevent movement thereof relative to said lead clip, and also releasably holds a lead or other component. An in-line lead clip arrangement (60,68,70,72,62) comprises an inner clip (68,70,72) that can be closed around a line and an outer lead (62) having a passage for receiving said clip and retaining it closed around the line and a flexible tube (76) surrounding the line.

## Description

This invention relates to a new design of clip used in modern fishing rigs.

Increasingly, anglers use clips to attach sinking objects, most commonly referred to as leads, to a fishing rig. The term 'lead' used herein to describe any object applied for the purposes of increasing the weight of the line. A fishing rig generally consists of a short length of line to which the baited hook is attached (referred to as the hook length line), and typically a metal swivel to link the hook length line to the main fishing line that comes from the rod and reel. These clips are normally referred to as lead clips or, where provision is made to eject the lead, safety lead clips.

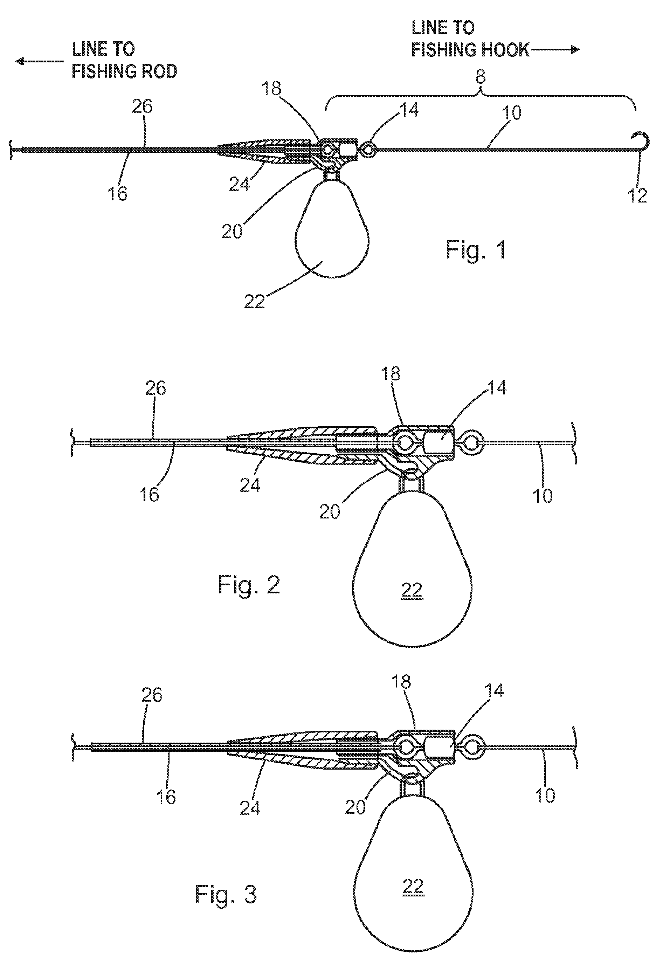

Figures 1 to 3 of the accompanying drawings illustrate the typical set up of a conventional safety lead clip. In these drawings, the fishing rig 8 comprises a hook length line 10 to which the hook 12 is attached at one end and the other end is tied to one end of a metal swivel 14. The other end of the swivel is tied to the main fishing line 16. The safety lead clip 18 is a one piece moulded hard plastics component having a cylindrical part which fits over the swivel, and a hook part 20, onto which a lead 22 or other sinking object can be hung.

The most common design of lead clip incorporates an in-built safety feature, enabling the lead 22 to be ejected from the rig 8, when under a sufficient level of force. This force can be caused by either the lead 22 snagging on an underwater obstruction, or by the pull of a large fish being hooked by the fishing rig 8.

The above safety feature is commonly achieved by pushing a soft cone shaped sleeve 24, referred to as the lead clip sleeve or tail rubber, that has the main fishing line 16 threaded through it, on to the hard plastic safety lead clip 18 and over the tip of the hook 20 to which the lead 22 is attached. When the tail rubber 24 is pushed on to the lead clip it closes the hook feature of the clip, therefore locking the lead in place, until sufficient force is placed upon the lead to push the tail rubber off the hook shape, so ejecting the lead from the rig.

In conjunction with the above safety lead clip rig set-up, anglers increasingly use sections of flexible tube 26 threaded on to the main fishing line 16 from the rod and reel, adjacent to the lead clip, of various different weight and flexibility properties in order to achieve certain desired rig presentations, and to prevent line tangles during casting. The above tube length of flexible tube 26 is usually secured in the desired position by threading it inside the tail rubber 24 as shown in Figure 2 and sometimes also into the tubular end of the safety lead clip 18 as shown in Figure 3. The problem with this current practice is that the flexible tube is only held in place by frictional force produced by the elastic material property of the lead clip sleeve. This force is generally not strong enough to hold the tube in place in the event of the rig being handled by the tube length, or by the forces exerted on the tube during the process of casting.

The above current practice causes the angler to continually need to rethread the flexible tube inside the lead clip, often before every cast of the rig. It also often results in the flexible tube coming out during the cast, therefore reducing the performance of the rig.

This invention seeks to solve this problem by providing a lead clip that allows the flexible rig tube to enter inside and then to be gripped by one mechanism or another.

Accordingly, in one aspect, this invention provides a fishing rig clip comprising first and second portions adapted in use to be closed around a flexible tube surrounding a length of fishing line, wherein closing said first and second portions grips the flexible tube and restrains movement of the flexible tube with respect to the lead clip.

In this manner, a positive grip is facilitated by closing the first and second portions around the flexible tube to provide a gripping or crimping action.

A further issue addressed by this invention is that of the clip moving relative to the main fishing line and fishing rig during casting and use.

Accordingly, in another aspect, this invention provides a fishing rig clip comprising first and second portions adapted in use to be closed around an element connecting a fishing rig to a main fishing line, wherein closing said first and second portions anchors said connecting element against escape from said lead clip.

In a further aspect, this invention provides a clip arrangement for attaching a lead to a fishing line, the arrangement comprising:
a clip including first and second portions adapted in use to be closed around a fishing line;
a lead member having a passage extending therethrough adapted to receive said clip,
wherein following closing of the clip it may be retained in the closed position by inserting the clip into said passage.

Preferably, the internal passage and a cooperating region of the clip are stepped. Preferably, the clip also is adapted to grip a region of a flexible tube surrounding the fishing line. Preferably the clip includes a hollow tubular stem disposed adjacent an end of said first and second portions and secured to one of said portions. Preferably the lead member includes a portion of non-plastics material, conveniently a material substantially denser than plastics material, such as a metal.

In another aspect, this invention provides a lead clip comprising first and second portions adapted in use to be closed around a fishing line to connect said lead clip to said line, said lead clip including releasable attachment means for coupling a lead or other component to said lead clip but being releasable under load to uncouple said element.

Whilst the invention has been set out above, it extends to any normal combination of features set out above or in the remainder of the specification.

The invention may be performed in various ways and, by way of example only, two embodiments thereof will now be described in detail, reference being made to the accompanying drawings, in which:
Figures 1 to 3 are cross-section views showing a prior art arrangement and modifications thereto;
Figure 4 is a top plan view of the inner part of a lead clip in accordance with this invention, in the open position;
Figures 5(a) and (b) are a side view on the inner part of the lead clip closed around the fishing rig prior to insertion into the outer part of the lead clip and a view on the right hand end of the inner lead clip part when closed, respectively;
Figures 6(a) and (b) are a cross-section view showing the arrangement of Figure 5(a) when inserted into the outer part of the safety lead clip, and a view on the right hand end of the arrangement respectively;
Figures 7(a) and (b) are top views of a modified form of a second embodiment of inner lead clip part incorporating an anchorage for the swivel and a view on the right hand end respectively;
Figure 8 is a cross-section view through a safety lead clip arrangement in accordance with this invention with the inner and outer parts assembled and a tail rubber attached, and
Figures 9(a) to (e) are views of a further embodiment in the form of an in-line weight configuration in which an insert is closed around a fishing line and then retained in this position by passing the insert to lodge in a passage in a weight or lead.

In these particular embodiments a central core section of a lead clip part is formed by two halves 30, 32 that are connected by a flexible connection 34. When the fishing rig 36 is placed inside the two halves of the core section, the core section is then folded together to make a hollow tube shape that is then slid inside the outer lead clip part 38. The outer lead clip part 38 locks the inner core section 30, 32, 34 closed, maintaining gripping force on the flexible rig tube.

The inner core part 30, 32, 34 has two functions. When closed it defines a cylindrical cavity 40 for receiving part of a metal swivel 42 and a narrower diameter gripping section 44 having ribs 46 designed to grip or crimp against the flexible rig tube 48. The outer lead clip part 38 has a cylindrical cavity for receiving the inner core section and is designed to hold the inner core section closed tightly to grip the flexible tube 48. The outer lead clip part 38 has a hook 50 integrally formed therewith, the tip of which extends to lie parallel with a narrower diameter bore in the outer lead clip part. In use a tail rubber (not shown) is slipped over the end releasably to retain a weight or other sinking object in the hook.

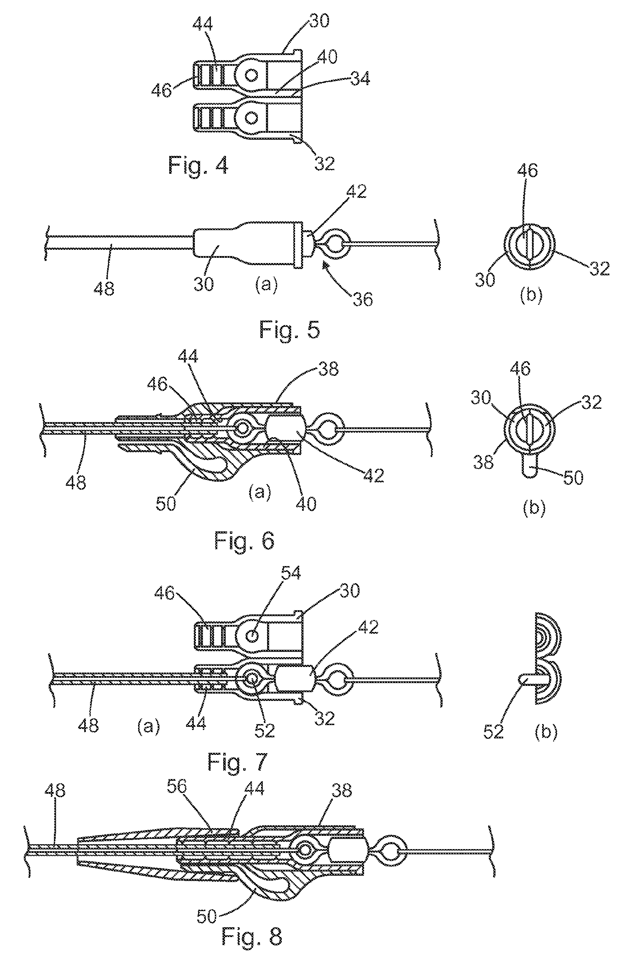

As seen in Figures 7(a) and (b) one of the inner core sections 30, 32can be provided with an inwardly extending peg 52 that is received in an aperture 54 in the other half of the core. In use the eye of a swivel 42 can be passed over the peg so that the inner core section retains the swivel, and thus the remainder of the safety lead clip is anchored relative to the main fishing line and fishing rig.

In the arrangement of Figure 6, the gripping regions of the inner core sections are received in an intermediate diameter bore in the outer lead clip part. In an alternative arrangement, as shown in Figure 8, the gripping section 44 can project through a bore in the outer lead clip part 38 to lie alongside the tip of the hook 50, so that the arrangement is secured by passing a tail rubber 56 over the clip 50 and the projecting portion of the inner core section.

One function of the core, if required, is that it locks the metal swivel connector part 42 in place by means of the moulded peg shape formed on one half of the core, which fits inside a corresponding hole shape 54 formed on the other half of the core. Should the swivel part not be required to be locked in position, this peg shape could be omitted from the design, or removed from the part before use.

A second function of the core is that the flexible rig tube 48 on the hook length of fishing line is firmly gripped in place, by one or more rib shapes 46 that are formed on the inside walls of core halves.

In the arrangement of Figure 8, the inner core part extends to form the full length of the lead clip part, and the thinner section of which is not enclosed by the outer part of the lead clip. Although the thinner section would not be full received and locked closed by the outer part of the lead clip, it would still be secured in position by the lead clip sleeve part that is fitted to complete the rig set-up.

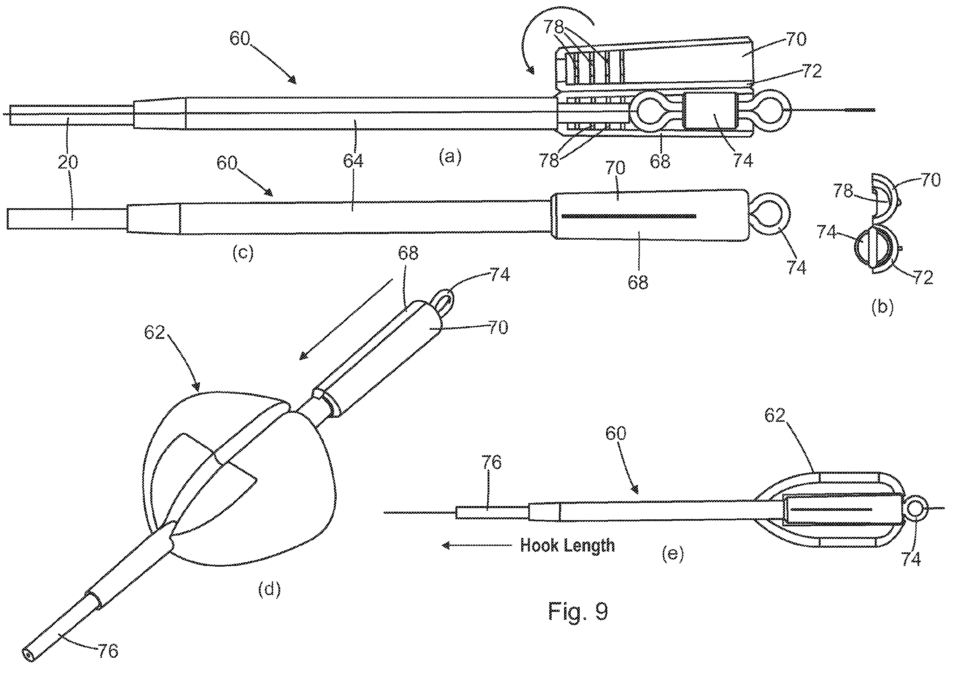

Referring now to the embodiment of Figure 9, in this arrangement, an in-line lead is secured to a fishing rig by a two-part assembly comprising an in-line insert 60 and an in-line lead 62. The in-line insert has a hollow tubular stem 64 to one end of which is integrally attached a clip 66, 68, 70 comprising portions interconnected by an integral live hinged 72. As previously, the fishing rig comprises a swivel 74 attached at opposite sides to respective lengths of fishing line. A flexible tube 76 of plastics material surrounds the fishing line and is required to be restrained against movement along the line. As previously, the clip portions 68, 70 have ribs 78 in them which, when the clip is closed, press into the outer surface of the tube 76 to prevent it from moving relative to the insert 60. As previously, the fishing line is assembled to the position shown in Figure 9(a) and the clip portions 68, 70 then closed to bite into the flexible tube 76 to grip it. It is seen from the closed position shown in Figure 9(c) that the insert 60 thus has a stepped outer diameter, and the larger diameter portion gradually tapers away from its merger with the narrow diameter portion. The in-line lead 62 has a stepped inner diameter designed to pass over the stepped portion of the in-line insert and to cooperate with the tapered portion with their shoulders abutting to wedge the inner clip portion closed, as seen in Figure 9(e).

## Claims

1. A lead clip comprising first and second portions adapted in use to be closed around a flexible tube surrounding a length of fishing line, wherein closing said first and second portions grips the flexible tube and restrains movement of the flexible tube with respect to the lead clip.

2. A lead clip according to Claim 1, wherein said clip is adapted in use to be closed around a connecting element, connecting said fishing line to a hook length line, and wherein closing said first and second portions also anchors said connecting element against escape from said lead clip.

3. A lead clip according to Claim 2, wherein said lead clip includes a peg in one of said portions that cooperates with an opening or eye in said connecting element to prevent escape.

4. A lead clip according to Claim 3, wherein said connecting element is a swivel and said peg is adapted to locate in an eye of said swivel.

5. A lead clip according to any of the preceding Claims, wherein said first and second portions are connected by an integral live hinge.

6. A lead according to any of the preceding Claims, wherein said first and second portions are retained in their closed position in use by an outer sleeve member surrounding said first and second portions.

7. A lead clip according to Claim 6, wherein said outer sleeve comprises an outer part of said lead clip and includes releasable attachment means for releasably attaching a lead or other component thereto.

8. A lead clip according to Claim 7, wherein said releasable attachment means include a hook portion.

9. A lead clip according to Claim 7 or Claim 8, wherein said releasable attachment means cooperates with a retaining sleeve adapted to releasably attach said lead or other component to said lead clip.

10. A lead clip according to Claim 7, wherein at least one of said first and second portions includes a gripping region for grippingly engaging said flexible tube, and said first and second portions are received in a bore in said outer part with the or each gripping region projecting beyond said outer part, and the lead clip being releasably secured in use by a sleeve member surrounding the exterior said grip regions.

11. A lead clip according to Claim 10, wherein said sleeve member also cooperates with said attachment means releasably to attach to said lead or other component.

12. A lead clip comprising first and second portions adapted in use to be closed around a connecting element connecting a fishing rig to a main fishing line, wherein closing said first and second portions anchors said connecting element against escape from said lead clip, wherein, in use, said connecting element and any line to which it is attached may be introduced and withdrawn laterally from the clip when said fist and second portions are open.

13. A lead clip comprising first and second portions adapted in use to be closed around a fishing line to connect said lead clip to said line, said lead clip including releasable attachment means for coupling a lead or other component to said lead clip but being releasable under load to uncouple said element wherein, in use, said connecting element and any line to which it is attached may be introduced and withdrawn laterally from the clip when said fist and second portions are open.

14. A clip arrangement for attaching a lead to a fishing line, the arrangement comprising:
a clip including first and second portions adapted in use to be closed around a fishing line;
a lead member having a passage extending therethrough adapted to receive said clip when closed,
wherein, in use, following closing of the clip, it may be retained in the closed position by inserting the clip into said passage.

15. A clip arrangement according to Claim 14, wherein the passage of the lead member and a cooperating region of the clip are stepped, with the clip optionally being adapted to grip a region of a flexible tube surrounding the fishing line and the clip optionally comprising a hollow tubular stem disposed adjacent an end of first and second portions and secured to one of said portions.
